(19) Europäisches Patentamt

European Patent Office

Office européen des brevets

(11) Veröffentlichungsnummer: **0 362 631 B1**

(12) **EUROPÄISCHE PATENTSCHRIFT**

(45) Veröffentlichungstag der Patentschrift: **21.07.93**

(51) Int. Cl.⁵: **G01P 5/00**, G01S 15/58

(21) Anmeldenummer: **89117478.1**

(22) Anmeldetag: **21.09.89**

(54) **Doppler-Strömungsgeschwindigkeitsmesser.**

(30) Priorität: **03.10.88 CH 3684/88**

(43) Veröffentlichungstag der Anmeldung:
**11.04.90 Patentblatt 90/15**

(45) Bekanntmachung des Hinweises auf die
Patenterteilung:
**21.07.93 Patentblatt 93/29**

(84) Benannte Vertragsstaaten:
**CH DE ES FR GB IT LI**

(56) Entgegenhaltungen:
**EP-A- 0 166 392**
**US-A- 3 302 161**
**US-A- 3 766 517**
**US-A- 3 914 999**
**US-A- 4 534 357**

(73) Patentinhaber: **KONTRON INSTRUMENTS HOL-
DING N.V.**
**Pietermaai 6 A P.O. Box 504**
**Curacao(AN)**

(72) Erfinder: **Fehr, Rainer**
**Im Wygärtli 36**
**CH-4114 Hofstetten(CH)**

(74) Vertreter: **Körber, Wolfhart, Dr.rer.nat. et al
Patentanwälte Mitscherlich & Partner, Sonnenstrasse 33, Postfach 33 06 09
W-8000 München 33 (DE)**

**Beschreibung**

Die Erfindung betrifft eine Doppler-Messvorrichtung zur Messung von Strömungsgeschwindigkeiten eines Fluids, das Partikel mitführt, die Ultraschallwellen reflektieren, welche Vorrichtung folgende Teile enthält:

a) einen Ultraschallwandler zum Bestrahlen des Fluids mit Ultraschallwellenimpulsen im Ansprechen auf entsprechende Sendeimpulse, die ihm mit einer vorgegebenen Impulswiederholungsfrequenz zugeführt werden, zum Empfangen der von Partikeln im Fluid reflektierten Echowellen, und zur Abgabe entsprechender Echosignale,

b) einen mit dem Ultraschallwandler verbundenen Sender zur Erzeugung von Sendeimpulsen, mit denen der Ultraschallwandler zur Abgabe der Ultraschallwellenimpulse angeregt wird,

c) einen mit dem Ultraschallwandler verbundenen Empfänger für den Empfang und Verarbeitung von Echosignalen, die wenigstens zwei Gruppen von Echowellen entsprechen, die von Partikeln im Fluid im Ansprechen auf einen ersten und einen zweiten gesendeten Wellenimpuls reflektiert werden, wobei benachbarte aber voneinander getrennte Frequenzbänder der Echosignale in je einem separaten Signalverarbeitungspfad verarbeitet werden, und

d) eine mit dem Ausgang des Empfängers verbundene Auswerteeinheit, mit der aus der mit dem Empfänger gewonnenen Doppler-Information ein Ausgangssignale abgeleitet wird, das der Strömungsgeschwindigkeit entspricht.

Eine Vorrichtung der oben erwähnten Art ist in der europäischen Patentanmeldung mit der Veröffentlichungsnummer 0 166 392 beschrieben. Sie zeigt ein Doppler-Meßsystem zur Geschwindigkeitsmessung, bei dem in einer ersten Ausführungsform der Sender eine einzige Frequenz emittiert; das Echosignal wird mit einem komplexen Referenzsignal gemischt und demoduliert, so daß das Dopplersignal in ein Paar von komplexen Signalen umgewandelt wird, die es ermöglichen, die Niedrig- und die Hochgeschwindigkeitskomponenten der empfangenen Signale zu errechnen. Bei einer zweiten Ausführungsform sendet der Sender nacheinander zwei verschiedene Sendefrequenzen, um eine Anzahl von komplexen Signalen zu erzielen. Mit dieser Vorrichtung ist im Prinzip möglich, eine erhebliche Erweiterung des Messbereichs zu erzielen. Für die praktische Nutzung dieses Vorteils ist jedoch eine erhebliche Erhöhung der Empfindlichkeit dieser bekannten Vorrichtung notwendig.

In der US PS 3 302 161 beschreibt ein Doppler-Meßsystem, bei dem gleichzeitig ein Paar von periodischen Impulsen unterschiedlicher Frequenz emittiert werden. Die Echosignale werden verstärkt und einem Mischglied oder Verstärker zugeführt. In dem Mischglied werden die beiden Echosignale unterschiedlicher Frequenz überlagert, so daß man ein Summenfrequenzsignal und ein Differenzfrequenzsignal erhält. Diese beiden Signale werden dann getrennt weiterverarbeitet. Bei dem Summensignal ist die Dopplerverschiebung zweimal so groß wie in dem empfangenen Echosignal, so daß auf diese Weise die Empfindlichkeit für die Geschwindigkeitsbestimmung gesteigert wird.

Der Erfindung liegt die Aufgabe zugrunde, die Empfindlichkeit bei einer Doppler-Messvorrichtung zur Messung von Strömungsgeschwindigkeiten eines Fluids zu erhöhen, so daß auch relativ schwache Nutzsignale noch berücksichtigt und verarbeitet werden können.

Diese Aufgabe wird mit einer im Oberbegriff des Patentanspruches 1 angegebenen Doppler-Messvorrichtung gelöst, die erfindungsgemäß die im Kennzeichenteil angegebenen Merkmale aufweist.

Weitere, vorteilhafte Ausgestaltungen der Erfindung sind in den abhängigen Ansprüchen beschrieben.

Mit der erfindungsgemäßen Doppler-Messvorrichtung wird eine erhebliche Erhöhung der Empfindlichkeit erzielt. Dies ist beim sogenannten Colour Flow Mapping (d.h. bei der Darstellung verschiedener Geschwindigkeitsbereiche mit verschiedenen Farben) sehr vorteilhaft. Die erhöhte Empfindlichkeit ermöglicht dabei eine feinere Unterteilung und dadurch eine deutlichere Darstellung der Strömungsbedingungen, z.B. in einem Blutgefäss. Erfindungsgemäss wird die Erhöhung der Empfindlichkeit insbesondere dadurch erzielt, dass der grösste Teil der Energie der gesendeten Ultraschallimpulse gerade in den Frequenzbändern konzentriert wird, in denen die Echosignale im Empfänger in je einem separaten Pfad verarbeitet werden.

Im folgenden werden anhand der beiliegenden Zeichnungen einige Ausführungsbeispiele der Erfindung beschrieben. Es zeigen:

| Fig. 1 | ein Blockschema einer Doppler-Messvorrichtung |
| Fig. 2 | das Frequenzspektrum einer Folge von Sendeimpulsen mit der Wellenform gemäss Fig. 3 |
| Fig. 3 | Sendeimpulse |
| Fig. 4 | ein Blockschema einer ersten Ausführungsform des Senders 15 in Fig. 1 |
| Fig. 5 | ein Blockschema des Registers 43 in Fig. 4 |

EP 0 362 631 B1

Fig. 6          Signaldiagramme zur Erläuterung der Funktionsweise des Senders gemäss Fig. 4

Fig. 7          ein Blockschema eines Dopplersignaldetektors

Fig. 8          ein Zeigerdiagramm

Fig. 9          den Phasengang eines Dopplersignaldetektors gemäss Fig. 9

Figuren 10 und 11   Zeigerdiagramme

Fig. 12         die Phasengänge eines Detektors gemäss Fig. 9 für zwei verschiedene Sendefrequenzen $f_1$ und $f_2$

Fig. 13         den erweiterten Phasengang des Dopplersignaldetektors einer erfindungsgemässen Doppler-Messvorrichtung, die gleichzeitig mit zwei verschiedenen Sendefrequenzen bzw. Sendefrequenzbändern arbeitet

Fig. 14         ein Blockschema einer Ausführungsform des Empfängers 16 in Fig. 1

Fig. 15         das Frequenzspektrum des Ausgangssignals am Ausgang des Tiefpasses 92 in Fig. 16

Fig. 16         das Frequenzspektrum des Ausgangssignals am Eingang des Tiefpasses 112 in Fig. 16.

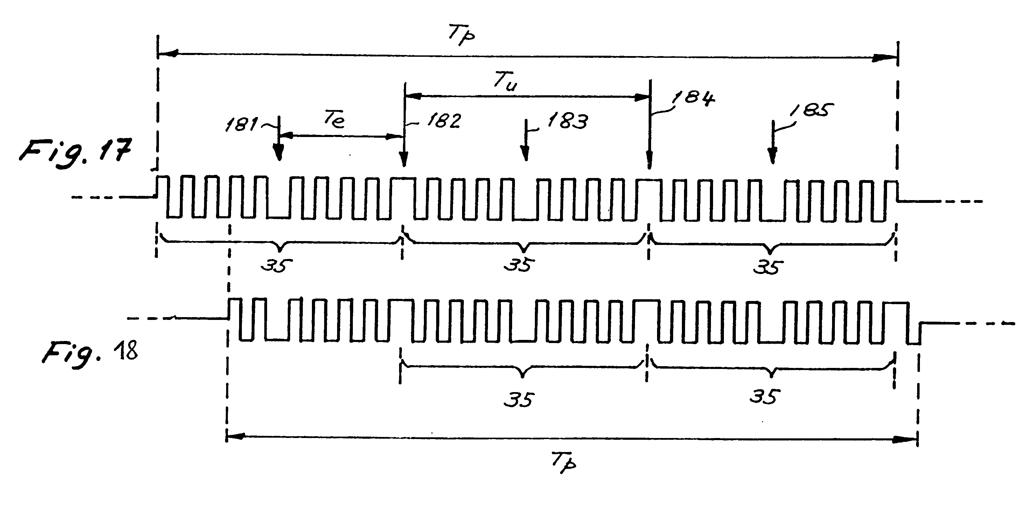

Fig. 17 und 18  Sendeimpulse

Fig. 19         eine schematische Darstellung des Frequenzspektrums einer Folge von Sendeimpulsen mit der Wellenform gemäss Fig. 19 oder Fig. 20.

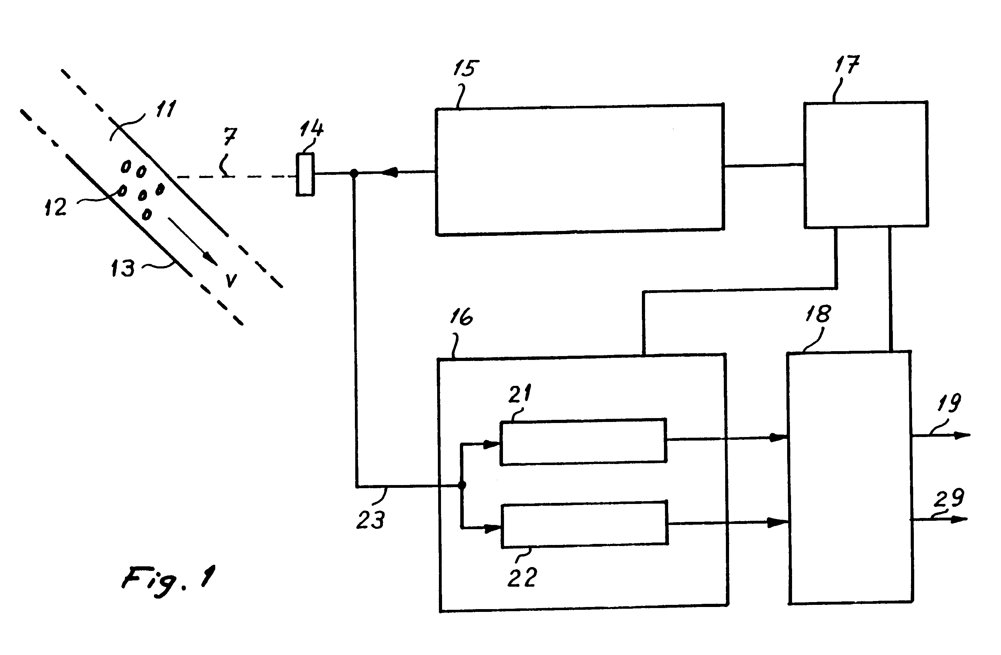

Fig. 1 zeigt das Blockschema einer Doppler-Messvorrichtung zur Messung von Strömungsgeschwindigkeiten eines Fluids 11, das Partikel 12 mitführt, die Ultraschallwellen reflektieren. Das Fluid kann z.B. das durch ein Blutgefäss fliessendes Blut sein. Das Prinzip einer solchen Vorrichtung ist in der deutschen Offenlegungsschrift DE-A-2406630 und in der entsprechenden amerikanischen Patentschrift US-A-3 914 999 beschrieben. Nach diesem bekannten Prinzip wird ein z.B. durch ein Rohr 13 fliessendes Fluid 11 mit wenigstens zwei aufeinanderfolgenden, von einem Wandler 14 abgegebenen Ultraschallimpulsen bestrahlt, die um die entsprechende Dopplerfrequenz verschobenen Echos von Reflektoren (z.B. Partikeln) im Fluid entlang des Ultraschallstrahl werden mit demselben Wandler 14 empfangen, und aus den Phasenunterschieden zwischen Echos gleicher Laufzeit vom ersten und zweiten gesendeten Ultraschallimpuls wird durch geeignete Signalverarbeitung in einer Auswerteeinheit 18 ein Ausgangssignal erzeugt, dessen zeitlicher Verlauf dem Geschwindigkeitsprofil des Fluids im untersuchten Querschnitt entspricht.

Wie in Fig. 1 gezeigt, enthält die Vorrichtung einen Ultraschallwandler 14, einen Sender 15, einen Empfänger 16, eine zentrale Steuereinheit 17 und eine Auswerteeinheit 18.

In der durch die gestrichelte Gerade 7 gezeigten Richtung bestrahlt der Ultraschallwandler 14 das Fluid 11 mit Ultraschallwellenimpulsen im Ansprechen auf entsprechende Sendeimpulse, die ihm mit einer vorgegebenen Impulswiederholungsfrequenz zugeführt werden. Der Wandler 14 empfängt ausserdem die von Partikeln im Fluid reflektierten Echowellen und gibt entsprechende Echosignale ab. Der Wandler 14 ist z.B. ein Ultraschallwandler mit folgenden technischen Daten:

- Die Sendefrequenz soll vorzugsweise um ca. 3,0 MHz liegen
- Resonanzfrequenz der Keramik: 3,2 MHz
- Durchmesser der kreisförmigen Keramik: 13 mm
- Krümmungsradius der Keramik: 120 mm
- Abstand zwischen dem Wandler und der Grenze Nahfeld/Fernfeld: 88 mm.

Der Sender 15 ist mit dem Ultraschallwandler 14 verbunden und dient zur Erzeugung von Sendeimpulsen, mit denen der Ultraschallwandler zur Abgabe der Ultraschallwellenimpulse angeregt wird.

Im Empfänger 16, der ebenfalls mit dem Wandler 14 verbunden ist, werden Echosignale verarbeitet, die wenigstens zwei Gruppen von Echowellen entsprechen, die von Partikeln im Fluid im ansprechen auf einen ersten und einen zweiten gesendeten Wellenimpuls reflektiert werden. Benachbarte, aber voneinander getrennte Frequenzbänder der Echosignale werden im Empfänger 16 in je einen separaten Signalverarbeitungspfad 21 bzw. 22 verarbeitet.

Mit der Auswerteeinheit 18, die mit den Ausgängen des Empfängers 16 verbunden ist, wird aus der mit dem Empfänger gewonnenen Dopplerinformation wenigstens ein Ausgangssignal abgeleitet, das Information über die Strömungsgeschwindigkeit enthält.

Die zentrale Steuereinheit 17 (master timing unit) erzeugt alle Steuer- und Taktsignale, die für eine programmierbare Betriebsart der Doppler-Vorrichtung notwendig sind. Die Steuereinheit 17 ist daher im wesentlichen ein programmierbarer digitaler Signalgenerator. Die wichtigsten Funktionen der zentralen Steuereinheit 17 sind wie folgt:

- Sie steuert den Sender 15, indem sie den Zeitpunkt und die Dauer der Sendeimpulse bestimmt.
- Sie liefert sämtliche Taktsignale für den Empfänger 16. Sie steuert damit den Signalfluss durch den Empfänger.

- Sie liefert die Taktsignale für die Auswerteeinheit 18 und steuert damit den Signalfluss durch diese Einheit.

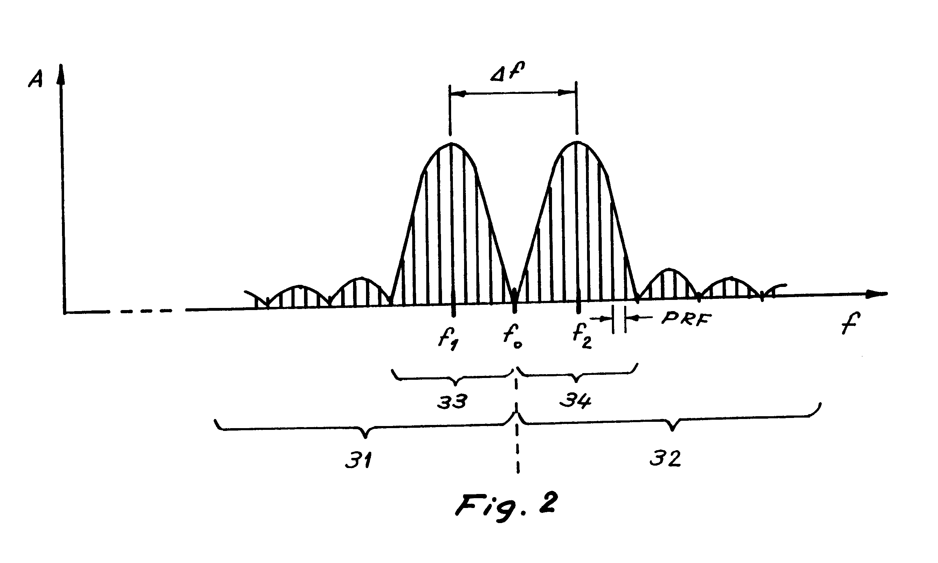

Erfindungsgemäss ist der Sender 15 so eingerichtet, dass das Frequenzspektrum der damit erzeugten, periodischen Folge von Sendeimpulsen aus zwei benachbarten, aber voneinander getrennten Frequenzbändern 31 bzw. 32 besteht, die in Fig. 2 dargestellt sind. Da die Sendeimpulse mit der Impulswiederholungsfrequenz PRF periodisch gesendet werden, besteht das Frequenzspektrum des Sendesignals aus einem in Fig. 2 dargestellten Frequenzlinienraster mit einem Rasterabstand von PRF. Wie aus Fig. 2 ersichtlich, wird durch die Form oder Gestaltung des Frequenzspektrums des Sendesignals erreicht, dass der grösste Teil der gesendeten Energie um zwei Frequenzen $f_1$ bzw. $f_2$ in diesen Frequenzbändern konzentriert wird.

Die Frequenzbänder 31 bzw. 32 in Fig. 2 liegen so nahe bei einander, dass sie vom gleichen Ultraschallwandler abgestrahlt werden können und in etwa die gleichen Gewebsdämpfungen erfahren. Die Frequenzen $f_0$, $f_1$, $f_2$ in Fig. 2 haben z.B. folgende Werte: $f_0 = 3,2$ MHz, $f_1 = 2,95$ MHz und $f_2 = 3,45$ MHz.

Wie in der Fig. 2 gezeigt, wird erfindungsgemäss vorzugsweise der grösste Teil der gesendeten Energie in zwei benachbarten Frequenzbändern 33 bzw. 34 konzentriert, wobei die Trägerfrequenz $f_0$ die Grenze zwischen diesen Bändern definiert, und wobei $f_1$ die Mittenfrequenz des Frequenzbandes 33 und $f_2$ die Mittenfrequenz des Frequenzbandes 34 ist.

Der Abstand zwischen den Frequenzen $f_1$ und $f_2$ wird als Frequenzintervall $\Delta f$ definiert. Wegen der symmetrischen Anordnung von $f_1$ und $f_2$ in Bezug auf $f_0$ gilt $f_2 - f_0 = f_0 - f_1 = \Delta f / 2$.

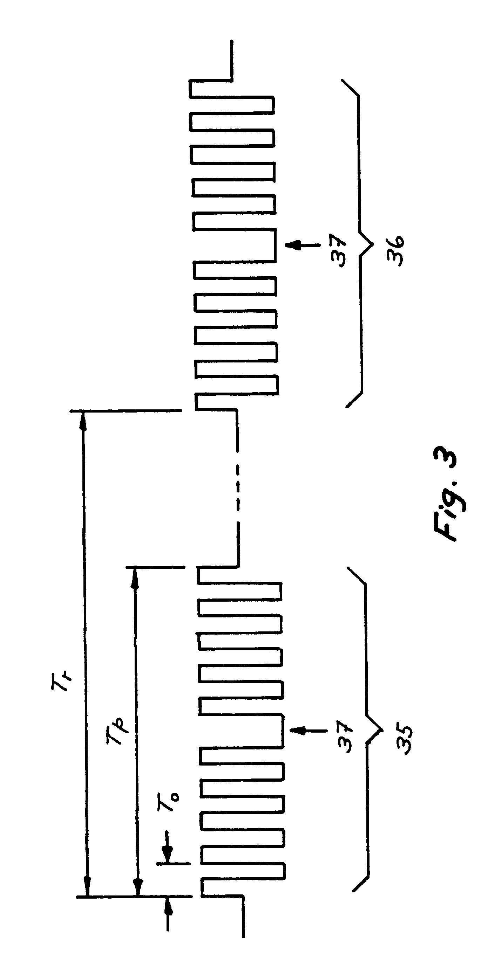

Fig. 3 zeigt ein Beispiel von zwei aufeinanderfolgenden Sendeimpulse 35 bzw. 36. Die gesendete Folge solcher Sendeimpulse hat ein Sendespektrum gemäss Fig. 2. Jedes der Sendeimpulse 35 bzw. 36 besteht zum grössten Teil aus einem Rechtecksignal der Frequenz $f_0$, sodass die Periode einer Schwingung des Rechtecksignals mit der Periode $T_o = 1 / f_0$ beträgt. Die Dauer eines Sendeimpulses ist $T_p$ und beträgt z.B. $T_p = 6$ Mikrosekunden. Der Abstand $T_r$ zwischen aufeinanderfolgenden Sendeimpulsen beträgt z.B. 250 Mikrosekunden, was einer Impulswiederholungsfrequenz PRF = 4 kHz entspricht. Die dem Wandler zugeführten Sendeimpulse haben z.B. eine Spannung die zwischen 50 und 100 Volt liegt.

Wie aus der Fig. 3 ersichtlich weicht jeder Sendeimpuls von einem periodischen Rechtecksignal dadurch ab, dass das Signal in der Mitte eine Stelle 37 aufweist, bei der eine Phasenumkehrung stattfindet. Diese Phasenumkehrung ist notwendig, damit die periodische Folge von Sendeimpulsen das Frequenzspektrum gemäss Fig. 2 hat.

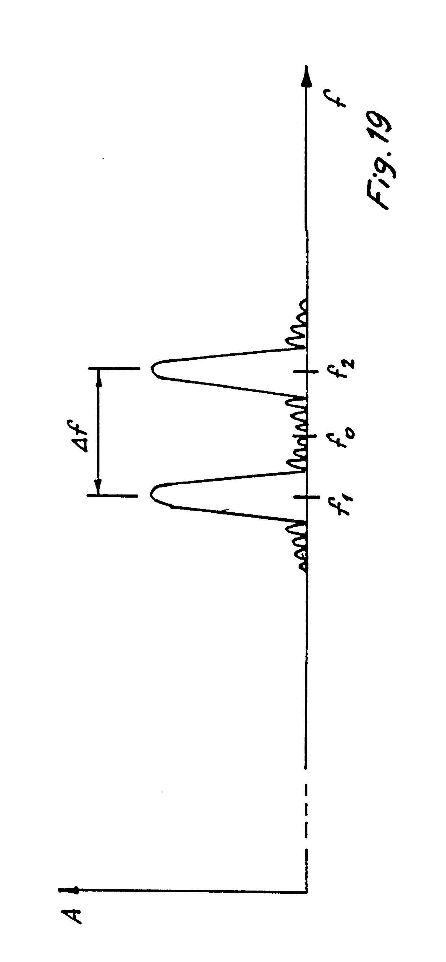

Figuren 19 und 20 zeigen zwei weitere Beispiele von erfindungsgemässen Sendeimpulsen. Der Sendeimpuls gemäss Fig. 19 setzt sich aus drei Sendeimpulselementen zusammen, wobei jedes Element den Verlauf des Sendeimpulses 35 gemäss Fig. 3 hat. Der Sendeimpuls gemäss Fig. 20 enthält zwei ganze Sendeimpulselemente mit dem Verlauf des Sendeimpulses 35 gemäss Fig. 3 und am Anfang und am Ende Teile eines solchen Sendeimpulselementes.

Da der Sendeimpuls gemäss Fig. 20 etwas weniger als drei ganze Sendeimpulselemente enthält, ist seine Dauer etwas kürzer als die Dauer des Sendeimpulses gemäss Fig. 19. Wie aus Fig. 20 ersichtlich, kann der Sendeimpuls bei einer beliebigen Flanke eines Sendeimpulselementes beginnen.

Die Sendeimpulse gemäss Fig. 19 und 20 enthalten Phasenumkehrstellen 181-185, wobei jede der Phasenumkehrstellen 181, 183, 185 der Phasenumkehrstelle 37 in Fig. 3 entspricht, während die Phasenumkehrstellen 182 und 184 durch die Zusammenfügung von zwei Signalimpulselementen entstehen. In der praktischen Realisierung werden die Sendeimpulse gemäss Fig. 19 oder Fig. 20 durch zeitliche Segmentierung eines an sich kontinuierlichen Signals erzeugt, der periodisch verteilte Phasenumkehrstellen hat.

Fig. 21 zeigt eine schematische Darstellung des Frequenzspektrums einer Folge von Sendeimpulsen, die die in Fig. 19 oder Fig. 20 gezeigte Wellenform haben. Zur Vereinfachung der Darstellung ist in Fig. 21 lediglich die Hüllkurve des Frequenzlinienrasters dargestellt, der wie in der Fig. 2 das Frequenzspektrum bildet. Aus einem Vergleich des Sendespektrums gemäss Fig. 2 für eine Folge von Sendeimpulsen, die je nur ein Sendeimpulselement enthalten, mit dem Frequenzspektrum gemäss Fig. 21 für eine Folge von Sendeimpulsen, die je mehrere Sendeimpulseelementen enthalten, ist es ersichtlich, dass durch die Verwendung der letztgenannten Sendeimpulsen gemäss Fig. 19 und 20 eine stärkere Konzentration der Energie der gesendeten Ultraschallwellen in schmäleren Frequenzbändern um die Frequenzen $f_1$ und $f_2$ erzielbar ist, wobei der Abstand $\Delta f$ gleich wie in Fig. 2 ist.

Wie in Fig. 2 wird in Fig. 21 mit $\Delta f$ der Abstand zwischen $f_1$ und $f_2$ bezeichnet.

Wie in Fig. 19 gezeigt, wird die Periode der Phasenumkehrstellen, d.h. der Zeitintervall zwischen gleichartigen Phasenumkehrstellen, mit $T_u$ bezeichnet, wobei $T_u = 2/\Delta f$. Dies gilt auch für den Sendeimpuls gemäss Fig. 20.

Innerhalb eines Sendeimpulses gemäss Fig. 19 oder Fig. 20 müssen die Phasenumkehrstellen in regelmässigen Zeitintervallen $T_e = T_u / 2$ liegen.

4

Wenn das Sendesignal aus einer Folge von Sendeimpulsen der Dauer $T_p$ besteht, und $T_p$ -wie in den Fig. 19 und 20-viel grösser als $T_u$ ist, ist die Lage des Beginns des Sendeimpulses und dessen Ende in Bezug auf die Lage der in ihm enthaltenen Phasenumkehrstellen nicht zwingend.

Die Dauer $T_p$ des Sendeimpulses ist vorzugsweise grösser als die Periode $T_u$ der Phasenumkehrstellen. Um das Spektrum des Sendesignals gemäss Fig. 2 zu gewährleisten, muss $T_p$ grösser als $T_u$ gewählt werden. Je grösser $T_p$ gegenüber $T_u$ ist, desto stärker ist die Konzentration der gesendeten Energie um die Seitenbandmittenfrequenzen $f_1$ und $f_2$ im Frequenzspektrum des Sendesignals.

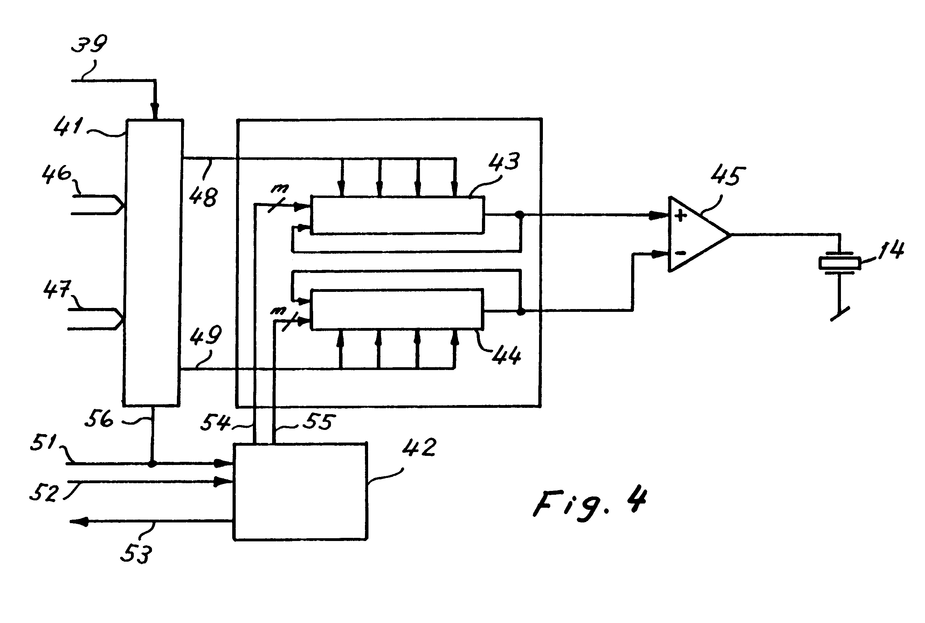

Fig. 4 zeigt eine erste Ausführungsform des Senders 15 in Fig. 1. Diese Ausführungsform besteht hauptsächlich aus digitalen Bausteinen. Die Senderschaltung gemäss Fig. 4 enthält ein Steuerungs-Interface 41, eine Steuereinheit 42, zwei Schieberegister 43 bzw. 44 und einen Leistungsverstärker 45 dessen Ausgang mit dem Ultraschallwandler 14 in Fig. 1 verbunden ist. Mit der Schaltung gemäss Fig. 4 werden Sendeimpulse gemäss Fig. 3 erzeugt, wobei die gesendete periodische Folge von Sendeimpulsen das Frequenzspektrum gemäss Fig. 2 hat.

Die erforderlichen Signale werden dem Steuerung-Interface 41 über Leitungen 39,56,51, einen Adressenbus 46 und einen Datenbus 47 zugeführt. Das Interface 41 ist mi t den Registern 43 bzw. 44 über Leitungen 48 bzw. 49 verbunden. Die Ausgänge der Register 43 bzw. 44 sind mit je einem Eingang des Leistungsverstärkers 45 verbunden. Die Steuereinheit 42 ist über Leitungen 51, 52 und 53 mit der zentralen Steuereinheit 17 in Fig. 1 verbunden. Die Steuereinheit 42 ist ausserdem über eine Leitung 56 mit dem Interface 41 und über Leitungen 54 bzw. 55 mit den Registern 43 bzw. 44 verbunden.

Die Register 43 und 44 haben den gleichen Aufbau und korrespondierende Anschlüsse. Diese Register werden aber mit verschiedenen aber komplementären Bytes geladen.

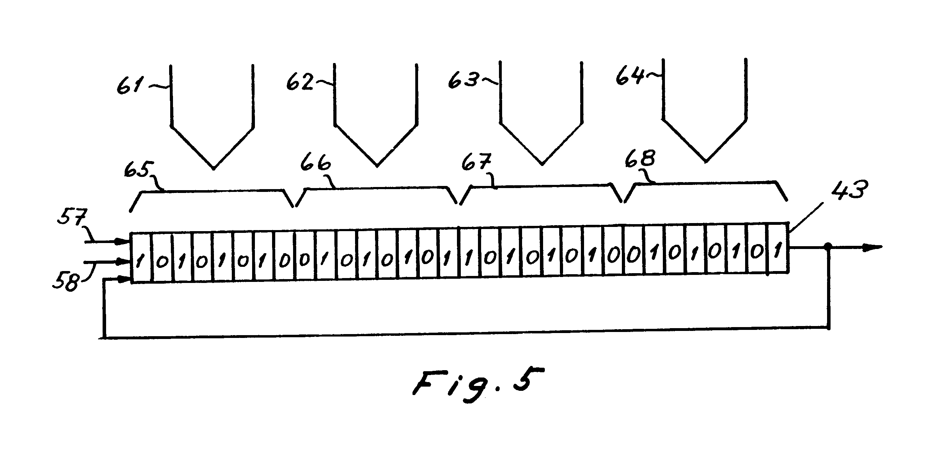

Die Fig. 5 zeigt eine schematische Darstellung des Registers 43 in Fig. 4. Wie in Fig. 5 gezeigt, werden in diesem Register 4 Bytes (Wörter) 65, 66, 67 und 68 über entsprechende Busleitungen 61, 62, 63 und 64 in das Register 43 geladen. Der Inhalt dieser Bytes ist in den Speicherzellen des Registers 43 in Fig. 5 dargestellt.

Wie aus Fig. 4 ersichtlich hat jedes der Register 43 bzw. 44 eine Rückführung von seinem Ausgang zu seinem Eingang. Wie nachstehend näher beschrieben wird, ist dies für die zweckmässige Funkstionsweise der Senderschaltung gemäss Fig. 4 von Bedeutung. Ebenfalls wichtig ist, dass die Inhalte der Register 43 und 44 komplementär sind, d.h. z.B. dass 101010... im Register 43 und 010101... im Register 44 gespeichert wird.

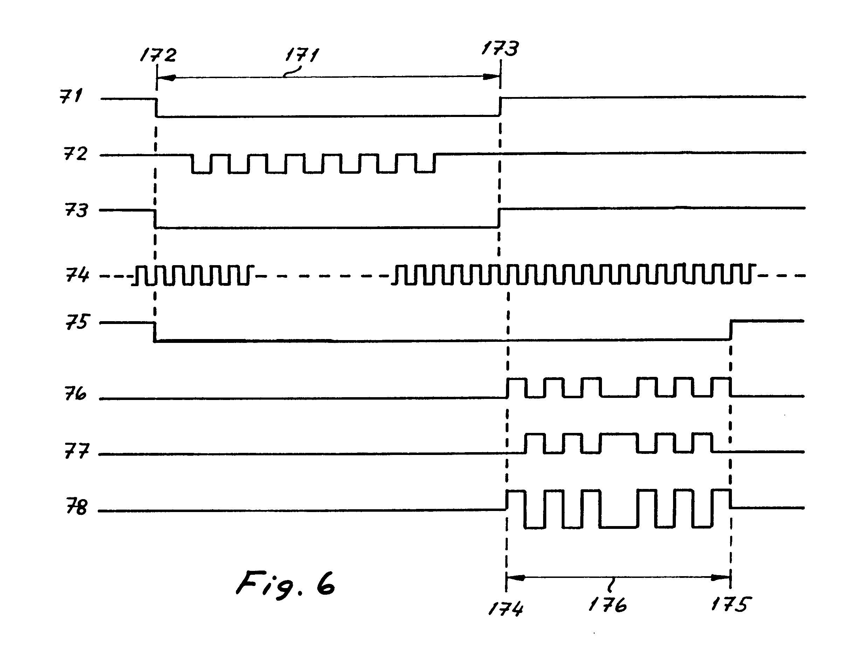

Die Funktionsweise der Senderschaltung gemäss Fig. 4 und 5 wird nun anhand der Signaldiagramme gemäss Fig. 6 erläutert:

Das Steuerung-Interface 41 dient zur Programmierung der Steuereinheit 42 und der Schieberegister 43 und 44. Hierfür erhält das Interface 41 über Buse 46, 47 Adressen bzw. Daten und über die Leitung 39 das zugehörige Strobesignal 72 in Fig. 6 vom dekodierten Mikroprocessor Bus des Hauptsystems gemäss Fig. 1. Das Signal 72 ist ein Taktsignal, das das Laden der vorgesehenen Bytes in die Register 43 bzw. 44 bewirkt. Für die Steuerung des Ladens der vorgesehenen Bytes in den Registern 43 bzw. 44 erhält das Interface 41 über Leitungen 51, 56 ein weiteres Signal 71. Das Laden der vorgesehenen Bytes ist nur in dem Zeitintervall 171 möglich, indem das Signal 71 den gezeigten Zustand hat. Zur Steuerung des Ladens der vorgesehenen Bytes in den Registern 43 bzw. 44 wird in die Steuereinheit 42 im Ansprechen auf das Signal 71 ein weiteres Signal 73 erzeugt, das den Registern über Leitungen 54 bzw. 55 zugeführt wird. Ueber die Leitung 52 erhält die Steuereinheit 42 ausserdem ein Taktsignal von der zentralen Steuereinheit 17 in Fig. 1. Im Ansprechen auf dieses Taktsignal erzeugt die Steuereinheit 42 ein korrespondierendes Taktsignal 74, das den Registern 43 bzw. 44 über die Leitungen 54 bzw. 55 zugeführt wird.

Wie in Fig. 6 gezeigt erstreckt sich das für das Laden der Register 43 bzw. 44 vorgesehene Intervall 171 zwischen den Zeitpunkten 172 und 173, bei denen jeweils eine Aenderung des Zustands der Signale 71 und 73 eintritt. Nach dem Zeitintervall 171 beginnt mit der nächsten Vorderflanke des Taktsignals 74 zum Zeitpunkt 174 ein Schiebevorgang bei den Registern 43 bzw. 44. Durch diesen vom Taktsignal 74 bewirkten Schiebevorgang werden an den Ausgängen der Register 43 bzw. 44 je ein Ausgangssignal 76 bzw. 77 erzeugt. Mit dem Leistungsverstärker 45 in Fig. 4 wird die Differenz dieser Ausgangssignale 76 und 77 gebildet und auf diese Weise ein Sendeimpuls 78 erzeugt, das den gewünschten Verlauf gemäss Fig. 3 hat.

Wie in Fig. 6 dargestellt, erstreckt sich das Schiebevorgang in den Registern 43 bzw. 44 über ein Zeitintervall 176, das vom Zeitpunkt 174 bis zu einem Zeitpunkt 175 dauert. Die Dauer des Zeitintervalls 176 und somit die Dauer des Sendeimpulses 78 wird durch einen in der Steuereinheit 42 enthaltenen Zähler festgelegt, der zum Zeitpunkt 175 eine Aenderung eines Signals 75 bewirkt, das das Ende des Sendeimpulses 78 markiert. Das Signal 75 wird über eine Leitung 53 von der Steuereinheit 42 zur zentralen Steuereinheit 17 in Fig. 1 übertragen.

5

Die Register 43 bzw. 44 sind Schieberegister mit der in Fig. 5 für das Register 43 gezeigten Struktur. Wie dort gezeigt, hat jedes dieser Register 4x8 Speicherzellen für je ein Byte und werden durch das Interface 41 mit 4 Bytes zu je 8 Bit geladen. Wie oben bereits beschrieben, wird anschliessend das 32 Bit lange Muster (Sendemuster) an einen Eingang des Leistungsverstärkers 45 geschoben. Durch die Rückführung des Ausgangs an den Eingang des Registers ist es möglich, den Schiebevorgang beliebig lange durchzuführen.

Die soeben beschriebene Senderschaltung gemäss Fig. 4 wird bevorzugt, weil sie vorwiegend aus relativ billigen digitalen Bausteinen besteht, und weil sie durch relativ leichte Veränderungen der Betriebsparameter eine flexiblere Gestaltung des Frequenzspektrums der Sendeimpulse ermöglicht.

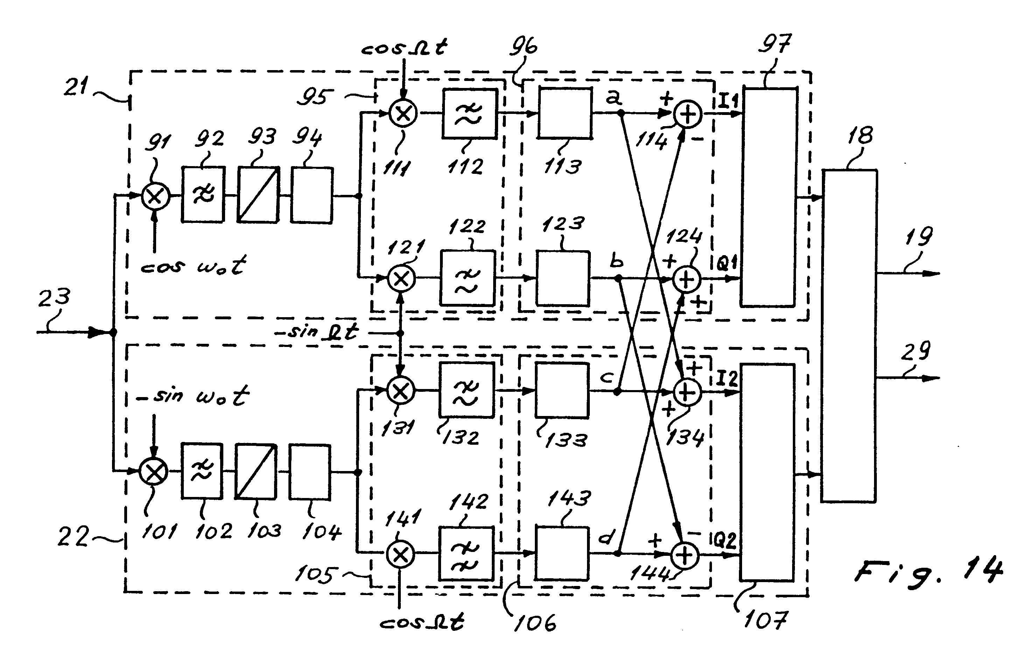

Nachstehend wird nun zunächst das Prinzip des Empfängers 16 anhand der Figuren 7-13 beschrieben. Anschliessend wird ein bevorzugtes Ausführungsbeispiel dieses Empfängers anhand der Fig. 14-16 beschrieben.

Wenn eine fliessende Flüssigkeit mit Ultraschallwellenimpulsen bestrahlt wird, ruft eine sich mit der Flüssigkeit bewegende Struktur (z.B. Blutpartikel des durch ein Gefäss fliessenden Blutes) durch den Dopplereffekt sowohl eine Frequenzverschiebung wie auch eine Phasenverschiebung in dem empfangenen Echo hervor.

Nach einem an sich bekannten Prinzip wird die Durchflussgeschwindigkeit v in einem bestimmten Punkt entlang des Ultraschallstrahles durch einen Phasenvergleich zu zwei verschiedenen Zeitpunkten ermittelt. Hierfür wird aus den empfangenen Echosignalen Information über die Phase des Echosignals zu jedem der Zeitpunkte abgeleitet. Das Echosignal $f_e$ von einem bestimmten Punkt lässt sich durch den folgenden Ausdruck darstellen, wobei $\omega_o = 2\pi f_o$ und $\omega_d = 2\pi f_d$, und wobei $f_o$ die Sendefrequenz und $f_d$ die durch den Dopplereffekt hervorgerufenen Frequenzverschiebung des Echosignals sind:

$$f_e = \cos(\omega_o + \omega_d) t$$

Nach dem bekannten Prinzip wird das Echosignal $f_e$ über eine Leitung 151 dem Eingang einer Quadraturdemodulationstufe gemäss Fig. 7 zugeführt. Diese Stufe besteht aus der in Fig. 7 gezeigten Anordnung von 2 analogen Multiplizieren 152 bzw. 153, 2 Tiefpassfiltern 154 bzw. 155 und 2 Festechofiltern 156 bzw. 157 (in der Radartechnik als Moving Target Indicator bekannt). Diese Filter dienen zur Unterdrückung von Festechoanteilen der demodulierten Echosignale. Wie in Fig. 7 gezeigt, wird das Echosignal $f_e$ im Multiplizierer 152 mit einem Signal $\cos \omega_o t$ und im Multiplizierer 153 mit einem Signal $-\sin \omega_o t$ multipliziert. So werden am Ausgang der Multiplizierer Ausgangssignale I' bzw Q' erzeugt, die wie folgt definiert sind:

$$I' = \cos\omega_o t \cdot \cos(\omega_o + \omega_d)t = \tfrac{1}{2}[\cos(2\omega_o + \omega_d) t + \cos \omega_d t]$$
$$Q' = -\sin\omega_o t \cdot \cos(\omega_o + \omega_d)t = -\tfrac{1}{2}[\sin(2\omega_o + \omega_d) t - \sin\omega_d t]$$

Nach der Filterung der Signale I' bzw. Q' in den Tiefpässen 154 bzw. 155 und in den Festechofiltern 156 bzw. 157 werden am Ausgang der Quadraturdemodulationsstufe gemäss Fig. 7 folgende Signale I bzw. Q erzeugt:

$$I = \tfrac{1}{2}\cos \omega_d t \text{ und } Q = \tfrac{1}{2}\sin \omega_d t$$

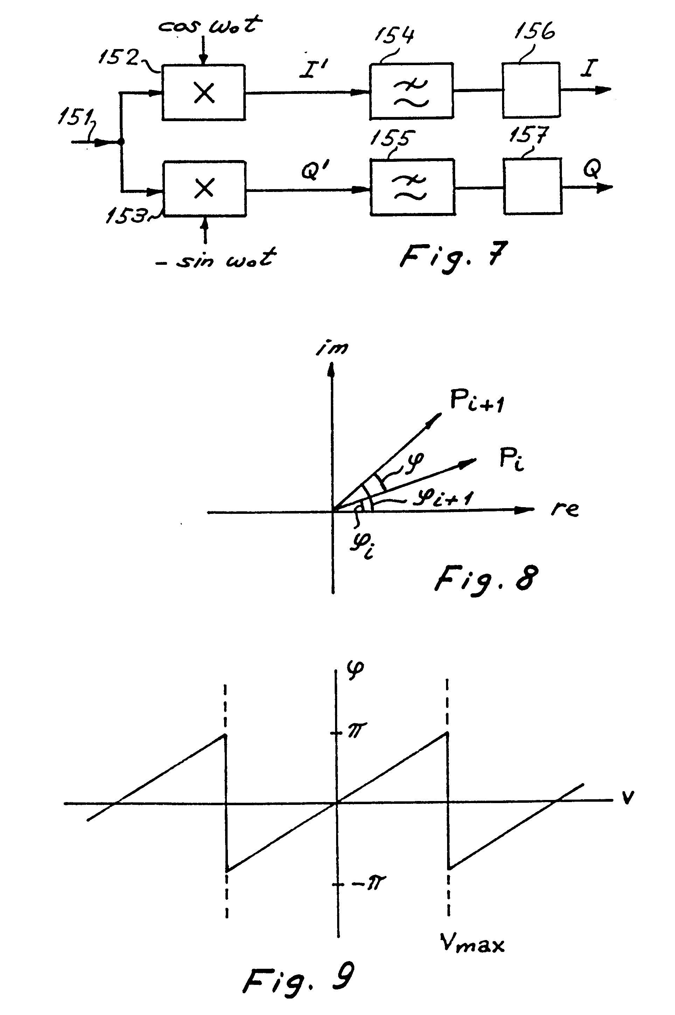

Um die Durchflussgeschwindigkeit v aus $\omega_d$ für einen bestimmten Ort auf den Ultraschallstrahl zu ermitteln, muss man mindestens zwei Ultraschallimpulse im zeitlichen Abstand $T_r$ aussenden, wobei $T_r = 1/PRF$ und wobei PRF die Impulswiederholungsfrequenz der gesendeten Ultraschallimpulse ist. Auf diese Weise werden mit der Quadraturdemodulationsstufe gemäss Fig. 7 zwei (bzw. mehrere) von den Echosignalen abgeleiteten Signalpaare $I_i$, $Q_i$ gebildet, die das mit der Impulsewiederholungsfrequenz abgetastete Dopplersignal von einem bestimmten Ort darstellen. Anhand jedes der Signalpaare $I_i$, $Q_i$ lässt sich ein komplexer Zeiger $P_i = I_i + j Q_i$ definieren, der sich mit jeder Abtastung um einen Winkel $\phi$ dreht. Da $\omega = d\phi/dt$ gilt, ist $\phi$ proportional zu $\omega_d$. Fig. 8 zeigt die komplexen Zeiger oder Vektoren $P_i$ und $P_{i+1}$, ihre Phasenwinkel, sowie die Phasendifferenz zwischen $P_i$ und $P_{i+1}$.

Mit den Wertepaaren $I_i$, $Q_i$ kann man durch Berechnung von $\phi$ die Richtung und die Geschwindigkeit der Drehung des komplexen Zeigers $P_i$ bestimmen. Wie aus dem in Fig. 9 dargestellten Phasengang des Empfangssystems gemäss Fig. 7 ersichtlich, ist $\phi$ bis auf einen konstanten Faktor ein Mass für die detektierte Durchflussgeschwindigkeit v und liefert für Werte von v innerhalb des durch das Abtasttheorem gesetzten Grenzen $\pm v_{max}$ richtige Resultate für v.

Anhand jedes der Wertepaare $I_i$, $Q_i$ lässt sich ferner einen konjugiert komplexen Zeiger $P^*_i = I_i - j Q_i$ definieren.

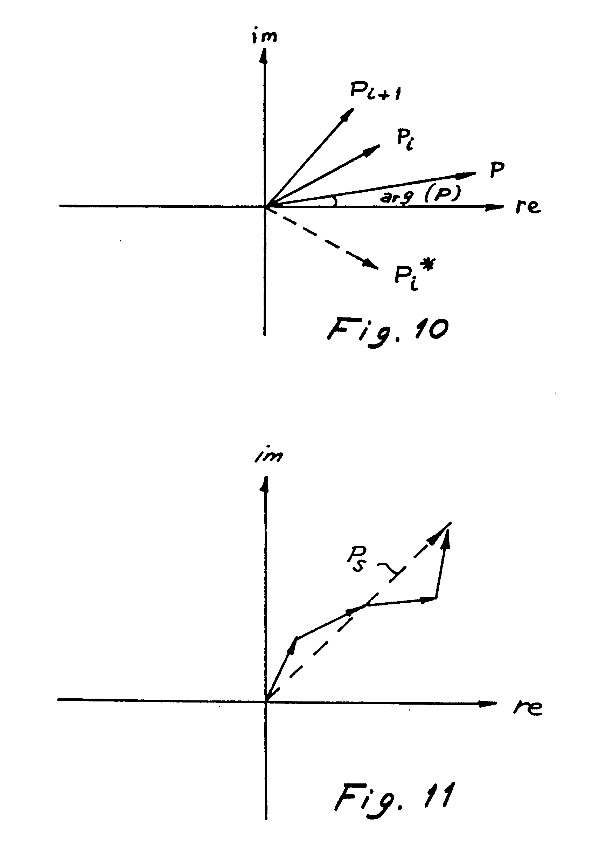

Durch folgende komplexe Multiplikation lässt sich dann ein weiterer komplexer Zeiger P definieren, der in Fig. 10 dargestellt ist und dessen Phasenwinkel arg (P) den Differenzwinkel $\phi$ der Zeiger $P_i$ und $P_{i+1}$ ist (siehe Fig. 10):

$P = P^*_i \cdot P_{i+1}$

$\phi = \text{arg} (P)$

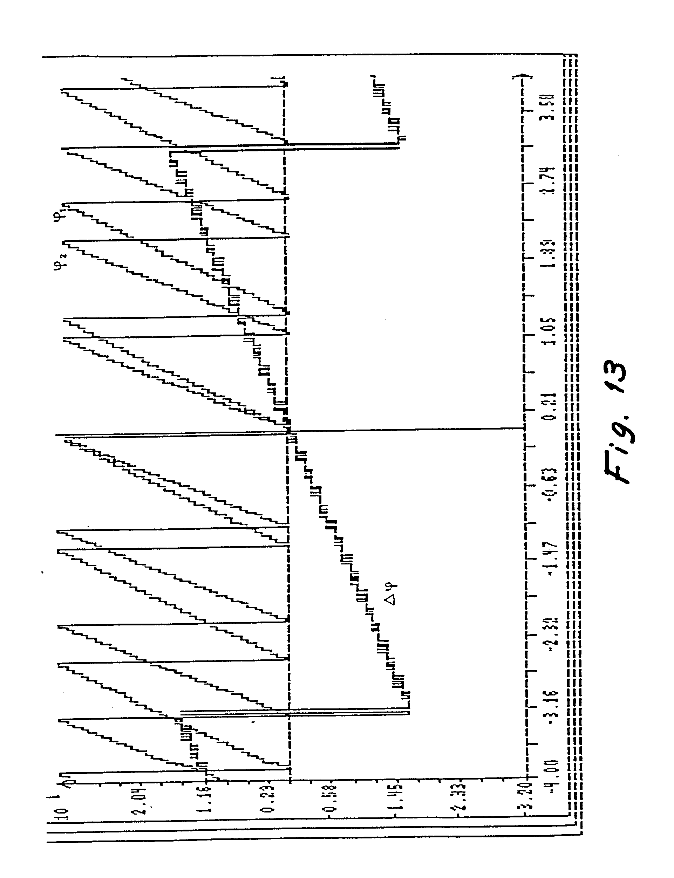

Die Genauigkeit des ermittelten Wertes von $\phi$ lässt sich erhöhen, indem man wie in Fig. 13 gezeigt, eine Mittelung des Argumentes von P durch die Bildung eines Summenverktors $P_s$ vornimmt, der wie folgt definiert ist:

$$P_S = \sum_N [P^*_i \cdot P_{i+1}]$$

wobei $P^*_i = I_i - j\, Q_i$ ist.

Da der Betrag von $P_s$ mit zunehmender N erheblich wächst, ist es für die Signalverarbeitung vorteilhaft, anstelle von $P_s$ mit einem normierten Vektor $P_n$ zu arbeiten, der das gleiche Argument wie $P_s$ hat und der wie folgt definiert ist:

$$P_n = (\sum_N [P^*_i \cdot P_{i+1}]) \, / \, (\sum_N |P_i|^2)$$

Der Vorteil der Verwendung von $P_n$ zur Ermittlung von $\phi$ liegt darin, dass die Argumente der einzelnen Vektoren P gemittelt werden und dass $|P_n|$ ein Mass für die Korrelation ist. D.h. für ein rauschenfreies Dopplersignal wird $|P_n| = 1$ sein und für ein stark verrauschtes $|P_n| < 1$. Kann das Rauschen im System genügend klein gehalten werden, so wird $|P_n|$ ein Mass für die Turbulenz der untersuchten Strömung sein.

Für das konventionelle Empfangssystem gemäss Fig. 7 ist der Messbereich durch den Wert von $v_{max}$ bestimmt, der durch die folgende Formel definiert ist:

$v_{max} = (PRF)\, c\, /\, 4\, f_o \cos\theta$

Es bedeuten dabei:

PRF = Impulswiederholungsfrequenz (der gesendeten Impulse)
$f_o$ = Sendefrequenz
c = Ausbreitungsgeschwindigkeit des Impulses
$\theta$ = Winkel zwischen Strahl und Flussrichtung

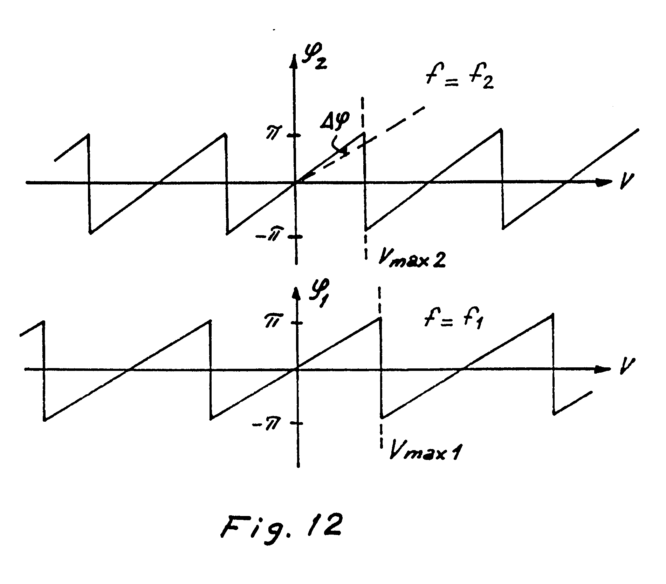

Der soeben definierte Messbereich gilt für Systeme die nur mit einer Sendefrequenz arbeiten. Arbeitet jedoch ein System mit zwei verschiedenen Sendefrequenzen $f_1$ und $f_2$, so ist es möglich, wie in Fig. 12 gezeigt, für jede der Sendefrequenzen den entsprechenden Phasengang $\phi_1$ - v bzw. $\phi_2$ - v zu bestimmen, wobei der Messbereich für jede Sendefrequenz durch die oben erwähnten Formel für $v_{max}$ definiert ist.

PRF, c und cos $\theta$ sind für beide in Fig. 12 gezeigten Phasengänge gleich. Es ist aus Fig. 12 ersichtlich, dass beim Vergleich der Phasengänge, d.h. wenn die Differenz der beiden Phasengänge gebildet wird, sich ein Differenzwinkel $\Delta\phi = \phi_2 - \phi_1$ definieren lässt, der für v = 0 genau 0 beträgt und mit wachsendem v grösser wird - entsprechend positiv bzw. negativ für + v bzw. - v. Wird der Grenzwert $v_{max}$ überschritten, so ist $\Delta\phi$ noch viel kleiner als $\phi_1$ und $\phi_2$. Ermittelt man anstelle von $\phi_2$ oder $\phi_1$ den Differenzwinkel $\Delta\phi$, so erreicht dieser den durch das Abtasttheorem gesetzten Grenzwert $v_{max}$ bei einem Wert von v, der viel Grösser sein kann als $v_{max\ 1}$ oder $v_{max\ 2}$. Es kann gezeigt werden, dass für den Phasengang von $\Delta\phi$ der durch das Abtasttheorem gegebene Grenzwert $v_{max}$ durch folgende Formel definiert ist:

$v_{max} = (PRF)\, c\, /\, 4\, (f_2 - f_1)$

Es geht aus dieser Formel hervor, dass wenn die Differenz $f_2 - f_1$ gegen 0 läuft, der Grenzwert $v_{max}$ theoretisch gegen unendlich strebt. In einer praktischen Realisierung ist z.B. eine 5-fache Vergrösserung

des Grenzwertes $v_{max}$ für den einfachen Phasengang $\phi$ - v eines Systems mit einer einzigen Sendefrequenz realistisch.

Die deutliche Erweiterung des Messbereiches ist aus der Darstellung der Phasengänge von $\phi_1$, $\phi_2$ und $\Delta\phi$ in Fig. 13 ersichtlich. Für eine solche Erweiterung des Messbereiches sind beim Empfänger zwei Signalverarbeitungspfade notwendig, wobei in einem Pfad Echos auf Sendeimpulse der Frequenz $f_1$ und in dem anderen Pfad Echos auf Sendeimpulse der Frequenz $f_2$ verarbeitet werden.

Ein solches Zweikanalsystem ist erfindungsgemäss im Empfänger 16 gemäss Fig. 1 vorgesehen.

Fig. 14 zeigt ein Blockschema einer bevorzugten Ausführungsform der Signalverarbeitungspfade 21 bzw. 22 des Empfängers 16 in Fig. 1.

Wie in Fig. 2 dargestellt, besteht das Frequenzspektrum des Sendesignals aus einem Frequenzlinienraster mit einem Rasterabstand von PRF. Die Unterdrückung der unerwünschten Seitenbänder beträgt dabei z.B. 12dB. Dies entspricht einem Faktor 4, d.h. der Energieinhalt bei den Frequenzen $f_1$ bzw. $f_2$ ist 16 mal grösser als derjenige bei $f_2 + \Delta_f$ bzw. $f_1 - \Delta_f$.

Das Frequenzspektrum des Echosignals stimmt weitgehend mit dem in Fig. 2 gezeigten Frequenzspektrum des Sendesignals überein. So wie das Spektrum des Sendesignals ist also das Frequenzspektrums des Echosignals energiemässig auch in zwei Frequenzbändern 31 bzw. 32 aufgeteilt.

Im Empfänger 16 werden Echosignale im Frequenzband 31 im Signalverarbeitungspfad 21 verarbeitet, während Echosignale im Frequenzband 32 im Signalverarbeitungspfad 22 verarbeitet werden. Das vom Ultraschallwandler 14 in Fig. 1 abgegebene Echosignal wird dem gemeinsamen Eingang der Signalverarbeitungspfade 21, 22 über eine Leitung 23 zugeführt.

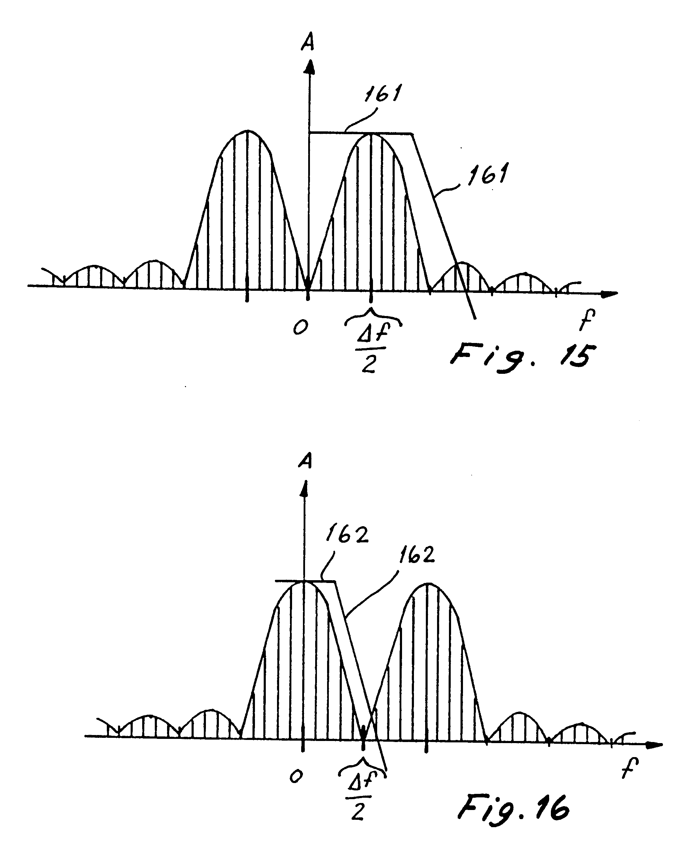

Wie aus Fig. 14 ersichtlich, haben die Signalverarbeitungspfade 21 bzw. 22 den gleichen prinzipiellen Aufbau und enthalten folgende Schaltungen: analoge Multiplizierer 91, 101; Tiefpass Filter 92, 102; Analog/Digital-Wandler 93, 103; Festechofilter 94, 104; Seitenbanddemodulatoren 95, 105; Integrierer und Seitenband-Trennschaltungen 96, 106 und Korrelatoren 97, 107. Die Ausgangssignale der Korrelatoren 97 und 107 sind die Ausgangssignale der Signalverarbeitungspfade 21 bzw. 22. Wie in den Fig. 1 und 16 gezeigt, werden diese Ausgangssignale entsprechenden Eingängen der Auswerteeinheit 18 zugeführt. Die Auswerteeinheit 18 liefert dann über eine Leitung 19 ein erstes Ausgangssignal, dessen Verlauf mit der Zeit dem Geschwindigkeitsprofil entlang des Ultraschallstrahles entspricht, und über eine Leitung 29 ein zweites Ausgangssignal, das Auskunft über die Turbulenz des gemessenen Flusses gibt.

Die Seitenbanddemodulatoren 95 bzw. 105 sind vorzugsweise als digitale Einseitenband-Demodulatoren ausgebildet und enthalten folgende Schaltungen: Multiplizierer 111, 121, 131, 141 und Tiefpässe 112, 122, 132, 142.

Die Integrierer und Seitenband-Trennschaltungen 96 bzw. 106 enthalten folgende Schaltungen: Integrierer 113, 123, 133, 143 und Addierer 114, 124, 134, 144.

Da die Signalverarbeitung in den Signalverarbeitungspfaden 21 bzw. 22 sehr ähnlich ist, wird nachstehend hauptsächlich di e Signalverarbeitung im Pfad 21 im Detail beschrieben, während die Beschreibung der Verarbeitung im Pfad 22 sich auf Aspekte beschränkt, die von der Verarbeitung im Pfad 21 abweichen.

Wie im oben beschriebenen, konventionellen Empfangsteil gemäss Fig. 7 wird auch in den Pfaden 21, 22 mit den Multiplizierern 91, 101 und den Tiefpässen 92, 102 zuerst eine Quadraturdemodulation des empfangen Echosignals durchgeführt. Die demodulierten Echosignale am Ausgang der Tiefpässe 92 bzw. 102 werden anschliessend mit den Analog/Digital-Wandlern 93 bzw. 103 in digitale Signale umgewandelt. Die Festechoanteile dieser Signale werden mit den nachgeschalteten Festechofiltern 94 bzw. 104 unterdrückt. Nach der soeben beschriebenen Verarbeitung hat das Ausgangssignal des Festechofilters 94 das in Fig. 15 innerhalb des Durchlassbereiches 161 des Tiefpasses 92 dargestellte Frequenzspektrum.

Wie aus Fig. 14 ersichtlich, wird die erste Quadraturdemodulation des Echosignals mit der Mittenfrequenz $f_0 = \omega_o/2\pi$ des Frequenzspektrums des Sendesignals durchgeführt. In jedem der Demodulatoren 95 bzw. 105 wird eine zweite Quadraturdemodulation durchgeführt. Dabei werden die Ausgangssignale der Festechofilter 94 bzw. 104 mit einer Modulationsfrequenz moduliert, die gleich $\Delta f/2$ ist, wobei $\Delta f = f_2 - f_1$ ist (Fig. 2).

Durch die Quadraturdemodulation im Demodulator 95 wird am Ausgang des Tiefpasses 112 ein Ausgangssignal erzeugt, dessen Frequenzspektrum in Fig. 16 innerhalb des Durchlassbereiches 162 des Tiefpasses 112 dargestellt ist.

Die Ausgangssignale der Tiefpässe 112 bzw. 122 des Demodulators 95 werden in der Schaltung 96 weiter verarbeitet. Dort wird das Signalrauschen mittels Integrierer 113 bzw. 123 reduziert. Mit den Addierern 114 bzw. 124 werden letztlich Signalpaare $I_1$, $Q_1$ gebildet, die dem Signalpaar I, Q beim konventionellen Empfangssystem gemäss Fig. 9 entsprechen. Auf ähnliche Weise werden mit den Schaltungen 105, 106 Signalpaare $I_2$, $Q_2$ gebildet.

Mit dem Korrelator 97 werden aus den Signalpaaren $I_1$, $Q_1$ Ausgangssignale abgeleitet, die dem Argument und dem Betrag eines normierten Vektors $P_{n1}$, der analog zum oben erwähnten Vektor $P_n$ definiert ist (siehe obige Beschreibung anhand der Fig. 7 bis 11). Das Argument des Vektors $P_{n1}$ ist ein Mass für die aufgrund vom Echosignal im Frequenzband 31 in Fig. 2 ermittelte Durchflussgeschwindigkeit. Der Betrag des normierten Vektors $P_{n1}$ ist ein Mass für die Turbulenz der untersuchten Strömung.

Auf ähnliche Weise werden mit dem Korrelator 107 aus den Signalpaaren $I_2$, $Q_2$ Ausgangssignale abgeleitet, die dem Argument und dem Betrag eines normierten Vektors $P_{n2}$ entsprechen, der analog zum oben erwähnten Vektor $P_n$ definiert ist. Das Argument des normierten Vektors $P_{n2}$ istein Mass für die aufgrund des Echosignals im Frequenzband 32 in Fig. 2 ermittelte Durchflussgeschwindigkeit. Der Betrag des normierten Vektors $P_{n2}$ ist ebenfalls ein Mass für die Turbulenz der untersuchten Strömung.

In der Auswerteeinheit 18 wird die Differenz der Argumente der normierten Vektoren $P_{n1}$ und $P_{n2}$ gebildet und auf diese Weise ein Ausgangssignal erzeugt, dessen Verlauf mit der Zeit dem Geschwindigkeitsprofil entlang des Ultraschallstrahls entspricht. Dieses Ausgangssignal wird über die Leitung 19 abgegeben.

In der Auswerteeinheit 18 wird ferner aus den Beträgen der normierten Vektoren $P_{n1}$ und $P_{n2}$ ein Signal erzeugt, das für die Turbulenz der untersuchten Strömung repräsentativ ist. Dieses Signal wird über die Leitung 29 abgegeben.

Als Ergänzung zur obigen Beschreibung von Ausführungsbeispielen wird nachstehend die erfindungsgemässen Erzeugung des Frequenzspektrums des Sendesignals und die erfindungsgemässe Verarbeitung des Echosignals anhand einer mathematischen Darstellung erläutert.

Um gleichzeitig auf zwei Frequenzen zu senden, ist es am einfachsten, ein Signal X(t) der Trägerfrequenz $f_0$ mit einem Signal A(t) in der Amplitude zu modulieren, um ein moduliertes Signal x(t) zu erzeugen, wobei

$$X(t) = A(t)\cos\omega_o t$$
$$A(t) = \cos\Omega t$$

Dies ergibt bekanntlich einen Träger mit der Kreisfrequenz $\omega_o$ mit einer Hüllkurve der Kreisfrequenz $\Omega$. Transformiert man diese Funktion in den Frequenzbereich, so ergibt sich ein reines Zweifrequenzsignal der Form:

$$x(t) = \cos\Omega t \cdot \cos\omega_o t = \tfrac{1}{2}[\cos(\omega_o + \Omega)t + \cos(\omega_o - \Omega)t]$$
wobei $\omega_o + \Omega = 2\pi f_2$ und $\omega_o - \Omega = 2\pi f_1$.

Das Signal X(t) enthält keinen Trägeranteil. Durch die Wahl von $\Omega$ bestimmt man die Differenzfrequenz (f2-f1).

Das Sendesignal besteht aus periodischen Impulsen von X(t). Das Frequenzspektrum dieses Sendesignals besteht aus einem Frequenzlinienraster mit dem Rasterabstand 1/PRF, wobei PRF die Impulswiederholungsfrequenz ist, wie in Fig. 2 dargestellt.

Die Herleitung der in Fig. 14 dargestellten Signale $I_1,Q_1$ und $I_2,Q_2$ wird im folgenden erläutert, wobei zur Vereinfachung der Darstellung mit einzelnen Frequenzen anstelle von Frequenzbändern operiert wird.

Das empfangene Zweiseitenbandsignal ist beschrieben durch

$$f_{e(t)} = 4.[\cos(\omega_o + \Omega + \omega_{d1})t + \cos(\omega_o - \Omega + \omega_{d2})t]$$

Nach der ersten Quadraturdemodulation mit der Mittenfrequenz $\omega_o$ erhält man nach anschliessender Tiefpassfilterung die Signale

$$I_{(t)} = \cos\omega_o t . f_{e(t)}$$

$$= 4[\cos\omega_o t . \cos(\omega_o + \Omega + \omega_{d1})t + \cos\omega_o t . \cos(\omega_o - \Omega + \omega_{d2})t]$$

$$= 2[\cos(2\,\omega_o + \Omega + \omega_{d1})t + \cos(\Omega + \omega_{d1})t +$$

$$\cos(2\,\omega_o - \Omega + \omega_{d2})t + \cos(\Omega - \omega_{d2})t \quad ]$$

$$\underline{I_{(t)} = 2[\cos(\Omega + \omega_{d1})t + \cos(\Omega - \omega_{d2})t]} \quad ,$$

$$\underline{Q_{(t)} = 2[\sin(\Omega + \omega_{d1})t - \sin(\Omega - \omega_{d2})t]}$$

Um nun die in den zwei Seitenbändern enthaltenen Dopplerverschiebungen $\omega_{d1}$ bzw. $\omega_{d2}$ zu erhalten, müssen wir die beiden Quadratursignale $I_{(t)}$ und $Q_{(t)}$ mit der Seitenbandfrequenz $\Omega$ demodulieren. Die anschliessende Tiefpassfilterung und Summierung der gemäss Fig. 14 an den Punkten a,b,c und d erhaltenen Signale ergibt die Signalpaare $I_1,Q_1$ und $I_2,Q_2$, welche zwei rotierende Zeiger mit den Kreisfrequenzen $\omega_{d1}$ und $\omega_{d2}$ darstellen.

$$a_{(t)} = I_{(t)} \cdot \cos\Omega t$$
$$= 2[\cos\Omega t . \cos(\Omega+\omega_{d1})t + \cos\Omega t . \cos(\Omega-\omega_{d2})t]$$
$$= \cos(2\Omega+\omega_{d1})t + \cos\omega_{d1}t + \cos(2\Omega-\omega_{d2})t + \cos\omega_{d2}t$$
$$a_{(t)} = \cos\omega_{d1}t + \cos\omega_{d2}t$$

$$b_{(t)} = I_{(t)} \cdot (-\sin\Omega t)$$
$$= 2[-\sin\Omega t . \cos(\Omega+\omega_{d1})t - \sin\Omega t . \cos(\Omega-\omega_{d2})t]$$
$$= -\sin(2\Omega+\omega_{d1})t + \sin\omega_{d1}t - \sin(2\Omega-\omega_{d2})t - \sin\omega_{d2}t$$
$$b_{(t)} = \sin\omega_{d1}t - \sin\omega_{d2}t$$

$$c_{(t)} = Q_{(t)} \cdot (-\sin\Omega t)$$
$$= 2[-\sin\Omega t . \sin(\Omega+\omega_{d1})t + \sin\Omega t . \sin(\Omega-\omega_{d2})t]$$
$$= -\cos\omega_{d1}t + \cos(2\Omega+\omega_{d1})t + \cos\omega_{d2}t - \cos(2\Omega-\omega_{d2})t$$
$$c_{(t)} = -\cos\omega_{d1}t + \cos\omega_{d2}t$$

$$d_{(t)} = Q_{(t)} \cdot \cos\Omega t$$
$$= 2[\cos\Omega t . \sin(\Omega+\omega_{d1})t - \cos\Omega t . \sin(\Omega-\omega_{d2})t]$$
$$= \sin(2\Omega+\omega_{d1})t + \sin\omega_{d1} - \sin(2\Omega-\omega_{d2})t + \sin\omega_{d2}t$$
$$d_{(t)} = \sin\omega_{d1}t + \sin\omega_{d2}t$$

Damit ergibt sich nun durch Summation

$$I_{1(t)} = \tfrac{1}{2}[a-c] = \cos\omega_{d1}t$$
$$Q_{1(t)} = \tfrac{1}{2}[b+d] = \sin\omega_{d1}t$$
$$I_{2(t)} = \tfrac{1}{2}[a+c] = \cos\omega_{d2}t$$
$$Q_{2(t)} = \tfrac{1}{2}[d-b] = \sin\omega_{d2}t$$

Anhand der Signalpaaren $I_1,Q_1$ und $I_2,Q_2$ werden nun die komplexe Zeiger oder Vektoren

$$P_{1i} = I_1 + jQ_1$$

$$P^*_{1i} = I_1 - jQ_1$$

$$P_{2i} = I_2 + jQ_2$$

$$P^*_{2i} = I_2 - jQ_2$$

definiert.

Die $I_1, Q_1$ Signalpaare, die im zeitlichen Abstand von 1/PRF aufeinanderfolgenden Vektoren $P_{1i}$, $P_{1(i+1)}$, $P_{1(i+2)}$ definieren, werden dem Korrelator 97 zugeführt.

Die $I_2, Q_2$ Signalpaare, die im zeitlichen Abstand von 1/PRF aufeinanderfolgenden Vektoren $P_{2i}$, $P_{2(i+1)}$, $P_{1(i+2)}$ definieren, werden dem Korrelator 107 zugeführt.

Im Korrelator 97 werden von $I_1, Q_1$ Ausgangssignale abgeleitet, die dem Argument bzw. dem Betrag eines normierten Vektors $Pn_1$ entsprechen, der durch

$$P_{n1} = (\sum_N [P_{1i}^* \cdot P_{1(i+1)}]) / (\sum_N |P_{1i}|^2)$$

definiert ist.

Im Korrelator 107 werden von $I_2, Q_2$ Ausgangssignale abgeleitet, die dem Argument bzw. dem Betrag eines normierten Vektors $P_{n2}$ entsprechen, der durch

$$P_{n2} = (\sum_N [P_{2i}^* \cdot P_{2(i+1)}]) / (\sum_N |P_{2i}|^2)$$

definiert ist.

Der Korrelator 97 liefert der Auswerteinheit 18 Signale, die dem Argument bzw. dem Betrag des Vektors $P_{n1}$ entsprechen. Der Korrelator 107 liefert der Auswerteeinheit 18 Signale, die dem Argument bzw. dem Betrag des Vektors $P_{n2}$ entsprechen.

In der Auswerteeinheit 18 wird nun durch Bildung der Differenz der Signale, die dem Argument von $P_{n1}$ und dem Argument von $P_{n2}$ entsprechen, ein Ausgangssignal gebildet, dessen Verlauf mit der Zeit dem Durchflussgeschwindigkeitsprofil entlang des gesendeten Ultraschallstrahles entspricht. Dieses Signal wird über die Leitung 19 abgegeben.

Dass die Differenz der Argumente von $P_{n1}$ und $P_{n2}$ proportional zur Durchflussgeschwindigkeit ist, geht aus der folgenden mathematischen Darstellung hervor, bei der allerdings zur Vereinfachung der Darstellung nicht mit Sendeimpulsen sondern mit einem kontinuierlichen Sendesignal gearbeitet wird:

Für die Dopplerfrequenz $f_d$ gilt ja bekanntlich

$$f_d = (2\ v\ \cos\theta)\ f_o\ /\ c$$

mit $\theta$ = Winkel zwischen Durchflussrichtung und Ultraschallstrahl

oder einfach

$$f_d = 2\ v\ f_o\ /\ c$$

wenn man für den Faktor $\cos\theta$ gleich 1 setzt, da er nicht relevant ist. Aufgrund der Definition $\omega = \frac{\Delta\phi}{\Delta t}$ ist die Dopplerfrequenz

$$f_d = (1\ /\ 2\pi)(\Delta\phi\ /\ \Delta t),,\ \text{wobei}\ \Delta t\ \text{die Pulswiederholungsperiode}$$

1/PRF darstellt, so kann man $\Delta\phi$ ableiten:

$$\Delta\phi = f_o\ (2v/c)\ 2\pi\ \Delta t$$

Definiert man nun:

$$f_1 = f_0 - \Delta f$$
$$f_2 = f_0 + \Delta f$$

Es wird damit

$$\phi_1 = f_1 \, (2v/c) \, 2\pi \, \Delta t$$
$$\phi_2 = f_2 \, (2v/c) \, 2\pi \, \Delta t$$

Diese Gleichungen beschreiben die in Figuren 14 und 15 gezeigten Phasengänge, wobei $\phi_1$ das Argument des oben definierten Vektors $P_{n1}$ ist und $\phi_2$ das Argument des oben definierten Vektors $P_{n2}$ ist.

Durch Bildung der Differenz der Argumente dieser Vektoren lässt sich ein Differenzwinkel $\Delta\phi$ bestimmen zu

$$\Delta\phi = (f_2 - f_1)(2v/c) \, 2\pi \, \Delta t$$

Es ist aus diesem Ausdruck ersichtlich, dass $\Delta\phi$ proportional zu v ist.

Wenn man nun mit periodischen Sendeimpulsen, d.h. mit einem abgetasteten System arbeitet, liegt die durch das Abtasttheorem für die detektierbaren Werte von v gegebene Limite dort, wo $\Delta\phi = \pm\pi$ beträgt. Somit wird $|v_{max}|$ zu

$$v_{max} = c/[4(f_2 - f_1)\Delta t]; \text{ wenn } \cos\theta = 1$$

oder mit $\Delta t = 1/PRF$

$$v_{max} = (PRF) \, [c/4(f_2 - f_1)]$$

Aus diesem Ausdruck ist es ersichtlich, dass der durch $v_{max}$ definierte Messbereich sich durch entsprechende Wahl von $f_1$ und $f_2$ sich beliebig gross machen lässt.

## Patentansprüche

1. Doppler-Messeinrichtung zur Messung der Strömungsgeschwindigkeit eines Fluids (11), das Ultraschallwellen reflektierende Partikel (12) mitführt, mit einem Ultraschallwandler (14), der in Antwort auf Sendeimpulse (35,36) eines Senders (15), die mit einer vorgegebenen Impulswiederholungsfrequenz gesendet werden, Ultraschallimpulse erzeugt, mit denen das Fluid bestrahlt wird und der die von den im Fluid befindlichen Partikeln reflektierten Echowellen empfängt und entsprechende Echosignale abgibt,

   einem mit dem Ultraschallwandler (14) verbundenen Empfänger (16) für den Empfang und die Verarbeitung von Echosignalen, die wenigstens zwei Gruppen von Echowellen entsprechen, die von Partikeln im Fluid in Antwort auf einen ersten und einen zweiten Sendeimpuls reflektiert werden, wobei benachbarte, aber voneinander getrennte Frequenzbänder der Echosignale in je einem separaten Signalverarbeitungspfad (21,22) verarbeitet werden,

   und mit einer mit dem Ausgang des Empfängers (16) verbundenen Auswerteeinheit (18), mit der aus der von dem Empfänger (16) gewonnenen Doppler-Information ein der Strömungsgeschwindigkeit entsprechendes Ausgangssignal abgeleitet wird,

   **dadurch gekennzeichnet, daß** der Sender (15) zur Erzeugung von Sendeimpulsen, deren Sendeenergie in zwei benachbarten, aber getrennten und um die Maxima $f_1$, $f_2$ liegenden Frequenzbändern (31,32) konzentriert ist, so ausgebildet ist, daß bei jedem Sendeimpuls mindestens ein Sendeimpulselement aus einem Rechtecksignal mit der Frequenz $f_0 = \frac{1}{2}(f_1 + f_2)$ emittiert wird, das in der Mitte eine Phasenumkehrstelle (37) besitzt, und daß die Auswertung in den um $f_1$ und $f_2$ liegenden Frequenzbändern erfolgt.

2. Doppler-Messvorrichtung nach Anspruch 1,
   **dadurch gekennzeichnet, daß** bei jedem Sendeimpuls mehrere Sendeimpulselemente mit einer Phasenumkehrstelle (181,183,185) emittiert werden, die in einer weiteren Phasenumkehrstelle (182,184) aneinander gesetzt sind, und das Zeitintervall $T_u$ zwischen gleichartigen Phasenumkehrstellen so bestimmt ist, daß

$$T_u = \frac{2}{(f_2 - f_1)}$$

ist.

3. Doppler-Messvorrichtung nach Anspruch 1 oder 2,
**dadurch gekennzeichnet, daß** der Abstand $T_r$ zwischen aufeinanderfolgenden Sendeimpulsen größer ist als die Dauer $T_p$ eines Sendeimpulses.

4. Doppler-Messvorrichtung nach Ansprüche 2 oder 3,
**dadurch gekennzeichnet, daß** die Dauer $T_p$ eines Sendeimpulses größer ist als der Abstand $T_u$ zwischen gleichartigen Phasenumkehrstellen innerhalb des Sendeimpulses.

5. Doppler-Messvorrichtung nach einem der Ansprüche 1 bis 4,
**dadurch gekennzeichnet, daß** der Sender (15) folgende Schaltungen enthält:
ein erstes Schieberegister (43) und ein zweites Schieberegister (44), die die gleiche Zahl von Speicherzellen haben, wobei der Ausgang von jedem Register mit seinem Eingang verbunden ist,
Mittel zum Laden der Schieberegister (43,44) mit der gleichen Zahl von Wörtern gleicher Lange, wobei korrespondierende Speicherstellen der Register mit komplementären Bits geladen werden,
eine mit beiden Registern (43,44) verbundene Steuereinheit (42), die durch Steuersignale einen Schiebevorgang der Registerinhalte über ein vorbestimmtes Zeitintervall bewirkt, wodurch an den Ausgängen der Register entsprechende Ausgangssignale erzeugt werden, und
einen Leistungsverstärker (45), dessen Eingänge mit den Ausgängen der Register verbunden sind, und der durch Bildung der Differenz der Ausgangssignale der Register ein Ausgangssignal erzeugt, das dem Ultraschallwandler (14) als Sendeimpuls zugeführt wird.

6. Doppler-Vorrichtung nach einem der Ansprüche 1 bis 5,
**dadurch gekennzeichnet, daß** jeder Signalverarbeitungspfad (21,22) des Empfängers (16) zwei nacheinander geschaltete Quadraturdemodulationsstufen enthält.

7. Doppler-Vorrichtung nach Anspruch 6,
**dadurch gekennzeichnet, daß** die zweite Quadraturdemodulationsstufe als digitaler Einseitenband-Demodulator (95,105) ausgebildet ist.

**Claims**

1. A Doppler measuring device for measuring the flow speed of a fluid (11) carrying particles (12) which reflect ultrasonic waves, comprising an ultrasonic transducer (14) which generates ultrasonic wave pulses in response to transmission pulses (35, 36) supplied from a transmitter (15) at a preset pulse repetition frequency, and with which the fluid is irradiated, and which receives the echo waves reflected by the particles in the fluid and emits corresponding echo signals,
   a receiver (16) connected with the ultrasonic transducer (14) for receiving and processing echo signals which correspond to at least two groups of echo waves reflected by particles in the fluid in response to a first and a second transmission pulse, whereby adjacent but separately spaced frequency bands of the echo signals are processed separately from each other in a signal processing path (21, 22) each, and
   an evaluation unit (18) connected with the output of the receiver (16) for deriving an output signal from the Doppler information obtained from the receiver (16), which signal corresponds to the flow speed,
   **characterised in that** the transmitter (15) for generating transmission pulses, the transmission energy of which is concentrated in two adjacent but separately spaced frequency bands (31, 32) lying about the maxima $f_1$, $f_2$, is designed in such a way that with each transmission pulse at least one transmission pulse element is emitted from a square wave signal at the frequency $f0 = 1/2 (f_1 + f_2)$, which pulse element has a central phase reversal point (37) and in that evaluation takes place in the frequency bands lying about f1 + f2.

2. Doppler measuring device according to claim 1,
   **characterised in that** for each transmission pulse several transmission pulse elements are emitted with a phase reversal point (181, 183, 185), which are joined in a further phase reversal point (182, 184) and in that the time interval $T_u$ between identical phase reversal points is determined such that

$$Tu = \frac{2}{(f_1 + f_2)} \; .$$

3. Doppler measuring device according to claim 1 or 2, **characterised in that** the interval $T_r$ between successive transmission pulses is greater than the duration $T_p$ of one transmission pulse.

4. Doppler measuring device according to claim 2 or 3, **characterised in that** the duration $T_p$ of one transmission pulse is greater than the interval $T_u$ between identical phase reversal points within the transmission pulse.

5. Doppler measuring device according to one of claims 1 to 4, **characterised in that** the transmitter (15) comprises the following circuits:
a first shift register (43) and a second shift register (44), which have the same number of memory cells, whereby the output of each register is connected with its input,
means for loading the shift registers (43, 44) with the same number of words of identical length, whereby corresponding memory cells of the registers are loaded with complementary bits,
a control unit (42) connected with the two registers (43, 44), which control unit, via control signals, effects a shift operation of the register content over a predetermined time interval, resulting in generating output signals at the outputs of the registers, and
a power amplifier (45), the inputs of which are connected with the outputs of the registers and which, by forming the difference between the output signals of the registers, produces an output signal which is supplied as a transmission pulse to the ultrasonic transducer (14).

6. Doppler measuring device according to one of claims 1 to 5, **characterised in that** each signal processing path (21, 22) of the receiver (16) comprises two sequentially arranged quadrature modulation steps.

7. Doppler measuring, device according to claim 6, **characterised in that** the second quadrature demodulation step is designed as a digital single sideband modulator (95, 105).

**Revendications**

1. Dispositif de mesure à effet Doppler pour mesurer la vitesse d'écoulement d'un fluide (11), qui entraîne avec lui des particules (12) réfléchissant des ondes ultrasoniques, comportant :
   - un convertisseur d'ultrasons (14), qui produit en réponse à des impulsions (35, 36) produites par un émetteur (15) et qui sont émises avec une fréquence de répétition d'impulsions prédéterminée, des impulsions ultrasoniques par lesquelles le fluide est irradié et qui reçoit des ondes d'écho réfléchies par les particules situées dans le fluide et engendre des signaux d'écho correspondants,
   - un récepteur (16) relié au convertisseur d'ultrasons (14) pour la réception et le traitement de signaux d'écho, qui correspondent au moins à deux groupes d'ondes d'écho, qui sont réfléchies par des particules du fluide en réponse à une première impulsion émise et une seconde impulsion émise, des bandes de fréquences adjacentes, mais séparées l'une de l'autre, des signaux d'écho étant traitées respectivement dans une voie séparée de traitement de signaux (21, 22),
   - et une unité d'évaluation (18), reliée à la sortie du récepteur (16) et par laquelle est dérivé, à partir de l'information-Doppler obtenue par le récepteur (16), un signal de sortie correspondant à la vitesse d'écoulement,
   - caractérisé en ce que l'émetteur (15) servant à produire des impulsions émises, dont l'énergie d'émission est concentrée dans deux bandes de fréquences (31, 32), adjacente mais séparée et couvrant les maxima $f_1$, $f_2$, est agencé de telle sorte que, pour chaque impulsion émise, au moins un élément d'impulsion émise soit émis à partir d'un signal rectangulaire ayant la fréquence $f_o =$

$\frac{1}{2}$ (f$_1$ + f$_2$), qui comporte au milieu une zone d'inversion de phase (37), et en ce que l'évaluation est effectuée dans les bandes de fréquences couvrant f$_1$ et f$_2$.

2. Dispositif de mesure à effet Doppler selon la revendication 1, caractérisé en ce que pour chaque impulsion émise sont émis plusieurs éléments d'impulsion émise comportant une zone d'inversion de phase (181, 183, 185), ces éléments étant placés l'un à côté de l'autre dans une autre zone d'inversion de phase (182, 184), et l'intervalle de temps T$_u$ entre des zones d'inversion de phase de même nature est déterminé de telle sorte que :

$$T = \frac{2}{(f_2 - f_1)}$$

3. Dispositif de mesure à effet Doppler selon la revendication 1 ou 2, caractérisé en ce que l'espacement entre des impulsions émises adjacentes est plus grand que la durée T$_p$ d'une impulsion émise.

4. Dispositif de mesure à effet Doppler selon les revendications 2 ou 3, caractérisé en ce que la durée T$_p$ d'une impulsion émise est plus grande que l'espacement T$_u$ entre des zones d'inversion de phase de même nature à l'intérieur de l'impulsion émise.

5. Dispositif de mesure à effet Doppler selon une des revendications 1 à 4, caractérisé en ce que l'émetteur (15) contient les circuits suivants :
   - un premier registre à décalage (43) et un second registre à décalage (44),qui ont le même nombre de cellules de mémoire, la sortie de chaque registre étant reliée à son entrée,
   - des moyens pour charger les registres à décalage (43, 44) avec le même nombre de mots de même longueur, des positions correspondantes de mémoire des registres étant chargées avec des bits complémentaires,
   - une unité de commande (42) reliée aux deux registres (43, 44) et produisant par des signaux de commande un processus de décalage des contenus de registres dans un intervalle de temps prédéterminé, de façon à obtenir aux sorties des registres des signaux de sortie correspondants, et
   - un amplificateur de puissance (45) dont les entrées sont reliées aux sorties des registres et qui produit, par formation de la différence entre les signaux de sortie des registres, un signal de sortie qui est appliqué, comme impulsion émise, au convertisseur d'ultrasons (14).

6. Dispositif de mesure à effet Doppler selon une des revendications 1 à 5, caractérisé en ce que chaque voie de traitement de signaux (21, 22) du récepteur (16) contient deux étages de démodulation en quadrature reliés en série.

7. Dispositif de mesure à effet Doppler selon la revendication 6, caractérisé en ce que le second étage de démodulation en quadrature est agencé comme un démodulateur numérique à une bande latérale (95, 105).

16

Fig.1

EP 0 362 631 B1

Fig. 2

Fig. 3

Fig. 4

EP 0 362 631 B1

EP 0 362 631 B1

Fig.5

Fig. 6

EP 0 362 631 B1

cos ω₀t

152

×

151

I'

154

≈

156

I

153

×

− sin ω₀t

Q'

155

≈

157

Q

**Fig. 7**

im

P$_{i+1}$

φ

P$_i$

φ$_{i+1}$

re

φ$_i$

**Fig. 8**

φ

π

v

−π

V$_{max}$

**Fig. 9**

Fig. 10

Fig. 11

EP 0 362 631 B1

Fig. 12

25

*Fig. 13*

Fig. 14

EP 0 362 631 B1

Fig. 15

Fig. 16

Fig. 17

Fig. 18

EP 0 362 631 B1

Fig. 19